# EUROPEAN PATENT APPLICATION

(11) **EP 1 001 387 A1**
(43) Date of publication of application: **17.05.2000**
(21) Application number: 99203786.1
(22) Date of filing: 12.11.1999
(51) Int. Cl.: G07D 11/00, B65G 51/04, B65G 51/06, B65G 51/28, B65G 51/30

(54) **System for transporting valuable objects**

(30) Priority: 13.11.1998 NL 1010551
(71) Applicant: Lamson Nederland B.V., 3812 PW Amersfoort (NL)
(72) Inventor: van Zee, Ramon Erwin, 3772 ER Barneveld (NL); van Tamelen, Willem, 3772 SG Barneveld (NL); Dekker, Fred, 3992 JW Houten (NL)
(74) Representative: Land, Addick Adrianus Gosling

(57) **Abstract**

The present invention relates to a system for transporting valuable objects, in particular banknotes, to and from a storage device for valuable objects, comprising:
- a transport tube member between a first and second position;
- a carrier member movable in the transport tube member for carrying the valuable objects;
- drive means for driving the carrier member in the transport tube member;
- a pick and place member for picking up valuable objects from the carrier member and placing valuable objects into the storage device for valuable objects and for picking up valuable objects from the storage device for valuable objects and placing valuable objects in the carrier member.

## Description

The present invention relates to a system for transporting valuable objects, in particular banknotes, to and from a storage device for valuable objects, in particular an automatic teller machine.

Transport systems such as a pneumatic dispatch systems are known for transporting banknotes from an automatic teller machine to a counter in a hall of a bank and from the counter back to the automatic teller machine.

A drawback of these known systems is that valuable objects must be removed manually from the automatic teller machine or arranged in the automatic teller machine, which is very labour-intensive and moreover adversely affects the security of the relevant system. Deposits in the form of banknotes from a customer are thus transported via the transport system to the automatic teller machine and collected in a so-called dump box, whereafter at the end of the working day one or more bank employees place the deposits manually into the automatic teller machine.

An object of the present invention is to provide a system for transporting valuable objects wherein such a drawback is obviated. The system for transporting valuable objects to and from a storage device for valuable objects therefore comprises:
- a transport tube member between a first and second position;
- a carrier member movable in the transport tube member for carrying the valuable objects;
- drive means for driving the carrier member in the transport tube member;
- a pick and place member for picking up valuable objects from the carrier member and placing valuable objects into the storage device for valuable objects and for picking up valuable objects from the storage device for valuable objects and placing valuable objects in the carrier member.

The pick and place member therefore ensures that the banknotes can be brought from the carrier into the automatic teller machine and from the automatic teller machine into the carrier without the intervention of a bank employee.

According to a preferred embodiment of the invention the carrier member of the system is adapted such that the valuable objects can be arranged and dispensed in the longitudinal direction of the carrier member and transversely of the longitudinal direction of the carrier member. Making the carrier accessible in longitudinal direction thereof ensures that for instance at the location of the counter station the banknotes can be placed in and taken out of the carrier in simple manner by counter staff, wherein the required counter area also remains limited. Making the carrier member accessible transversely of the longitudinal direction thereof ensures that a pick and place member can place the banknotes into the storage device for valuable objects or the automatic teller machine and remove them therefrom in simple manner, for instance with a movement in only two directions.

According to a further preferred embodiment of the invention a first receiving station is arranged on the transport tube member at a first position and a second receiving station at a second position. A receiving station further comprises a housing in which is arranged inter alia:
- a transport tube opening for connecting the transport tube;
- at least one endless belt for positioning a carrier member in the longitudinal direction;
- rotating means for rotating the carrier member in order to position the carrier member in the rotation direction.

When a carrier member arrives at a receiving station, an endless belt ensures that the carrier member is positioned accurately in the longitudinal direction, while rotating means ensure a correct positioning of the carrier member in the direction of rotation. A precise positioning can hereby be effected in simple manner in both longitudinal direction and rotation direction.

According to further preferred embodiments of the invention the system is provided with control means for controlling the system, wherein the control means preferably comprise a central control member and are connected to sensors.

According to a further preferred embodiment of the invention, the carrier member for transporting valuable objects, in particular banknotes, comprises in the transport tube:
- a lower carrier element;
- an upper carrier element;
- at least one spacer arranged between the lower and upper carrier element and fixed thereto;
- a holder arranged on the lower carrier element for holding the valuable objects in a suitable orientation.

Banknotes can be placed in a holder which is fixed to the lower carrier element, this such that the banknotes retain a fixed and suitable orientation during transport thereof.

According to a further preferred embodiment of the invention the carrier member is provided with means for varying the distance between the carrier elements, wherein in a first situation the distance is greater than in a second situation, wherein in the second situation at least a part of the holder extends through a passage opening in the upper carrier element. This has the advantage that for instance at the position of the counter station the banknotes protrude through a passage opening in the upper carrier element and can therefore be removed from the holder and optionally placed into the holder in very simple manner by counter staff.

According to a further preferred embodiment of the invention the holder of the carrier member is provided with clamping means which clamp the valuable objects in the suitable orientation in a first situation and release the valuable objects in the second situation. By clamping the banknotes in the first situation, i.e. the extended position, they can be held in the correct orientation during the transport phase. By releasing the valuable objects in the second situation, i.e. the compressed position, counter staff can take the banknotes out of the holder and, as the occasion arises, place them in the holder in simple manner and without exerting much force on the notes.

Further preferred embodiments, advantages and features of the present invention will become apparent in the light of the following description and the annexed figures, in which:
- figure 1 is a schematic overview of a system according to the invention;
- figure 2 shows a partly cut-away perspective view of a preferred embodiment of a counter station;
- figure 3 shows a partly cut-away perspective view of a preferred embodiment of a shuttle in a starting situation;
- figure 4 is a partly cut-away perspective view of a preferred embodiment of the shuttle of figure 3 in a compressed position; and
- figure 5 is a partly cut-away perspective view of a preferred embodiment of a receiving station at the location of the automatic teller machine.

A "teller cash recycler" is an automatic teller machine which is not only capable of dispensing money in the form of banknotes but which can also take in banknotes. Such a teller cash recycler or automatic teller machine 1 is provided with a dispensing opening 2 for dispensing banknotes, a take-in opening 4 for taking in banknotes and a refusal opening 3 in which can be placed banknotes refused or not accepted by the automatic teller machine. In order to place the banknotes from the dispensing opening 2 into a pneumatic dispatch system 8 or from the pneumatic dispatch system into take-in opening 4 there is provided a "pick and place" unit 5 which is provided with a gripper (not shown) which is displaceable in only two directions, i.e. horizontal direction x (7) and vertical direction z (6). The pneumatic dispatch system 8 and pick and place unit 5 are controlled by control electronics 9, which are in turn actuated by a computer 11 via an RS-232 transmission line. The transport system 8 transports the banknotes from automatic teller machine 1 to a random counter station 13 which is situated in the counter surface b of a counter of a bank. At the request of a customer, a bank employee (not shown) can request automatic teller machine 1 to dispense some banknotes via input terminal 14, which is connected via transmission lines to control electronics 9. The pick and place unit 5 responds to this request by taking banknotes in the desired number and of the correct type from the dispensing opening 2 of the automatic teller machine and placing them in a shuttle of pneumatic dispatch system 8. This shuttle is then transported to the counter station 13 associated with the relevant bank employee and subsequently positioned such that the bank employee can take the money out of the shuttle. Conversely, when a customer wishes to deposit money, a bank employee places this money in a shuttle which is situated in counter station 13 and which is subsequently transported to the automatic teller machine, whereafter pick and place unit 5 places the money in take-in opening 4 of the automatic teller machine. Automatic teller machine 1 then checks whether the money can actually be taken in. If this is the case, the money is stored in the interior of automatic teller machine 1. If this is not the case, for instance because the money is counterfeit, the money is placed in refusal opening 3, whereafter pneumatic dispatch system 8 can send the money back to the counter employee.

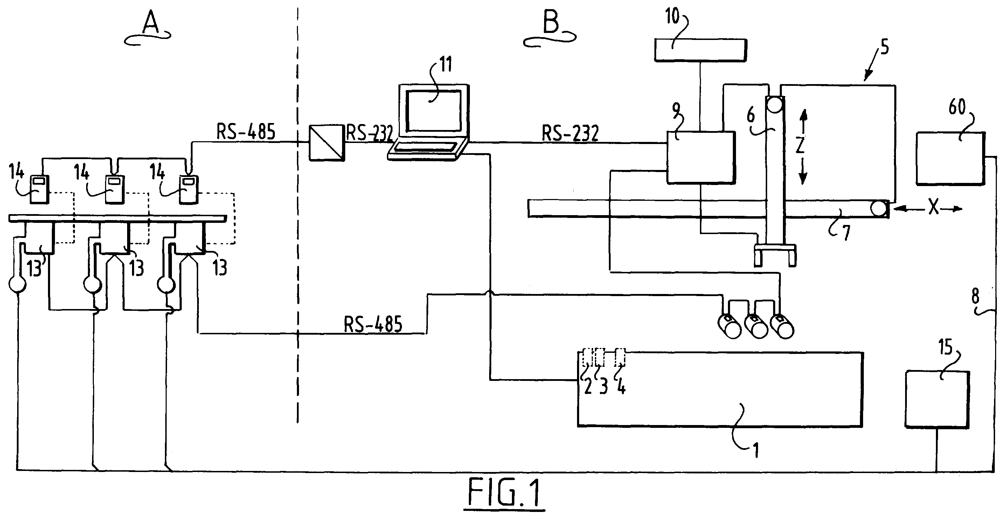

The above stated system of automatic teller machine 1, pick and place unit 5, pneumatic dispatch system 8, control 9/11 and counter stations 13 provides a fully automatic cash system wherein money can be sent to and from the counter of a bank without further manual labour being required. This not only results in a reduction in labour costs, but also provides the possibility of increasing the security of monetary transactions. Figure 1 thus designates with a broken line the separation between an area A accessible to bank staff and/or clients and a secured area B, in which latter area no bank personnel has to be present except in the case of malfunction or a desired adjustment of the control software in control computer 11.

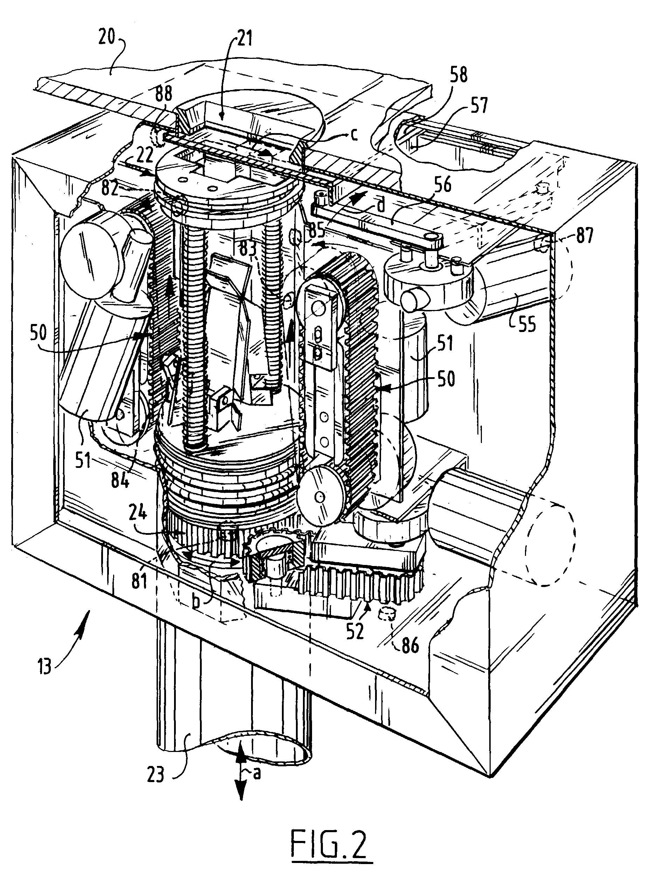

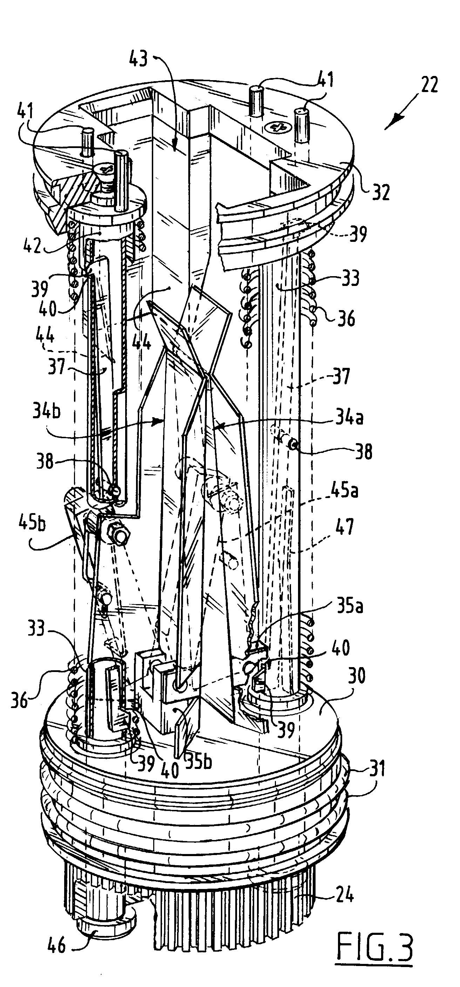

Figure 2 shows a preferred embodiment of a counter station 13 and figure 3 a preferred embodiment of a shuttle 22. A shuttle 22 is supplied and discharged via a transport tube 23 in the direction of the double arrow designated a. Transport of shuttle 22 takes place by applying an overpressure or underpressure in transport tube 23 which is generated by compressors 15. When a shuttle 22 has arrived at counter station 13, it has still to be positioned in the correct manner beneath a slot-like opening 21 in counter surface 20. For positioning in the longitudinal direction or transport direction the counter station 13 is provided with two endless belts 50 which are driven by electric motors 51 and which engage on either side of shuttle 22 and can move the shuttle in upward or downward direction.

An endless belt 52 can be placed against the ribbed ring 24 of shuttle 22. By operating endless belt 52, which is likewise provided with ribs which engage in the ribs of ring 24, the shuttle 22 can be rotated in the direction of the double arrow b until shuttle 22 is positioned such that the passage opening 43 provided in the top of shuttle 22 is aligned with the opening 21 in counter surface 20.

Cover plate 58, with which the opening 21 can be closed in substantially airtight manner, can be opened in the direction of arrow c by turning arm 56 in the direction of arrow d, whereby a strip 57 extending perpendicularly of cover plate 58 is carried along. The arm 56 is operated in this case by electric motor 55. When cover plate 58 is closed the arm 56 is turned in the opposite direction and a spring (not shown) fixed on one side on plate 58 or strip 57 and on the other side on the housing of base station 13 pulls cover plate 58 back into the original position, whereby opening 21 is once again closed.

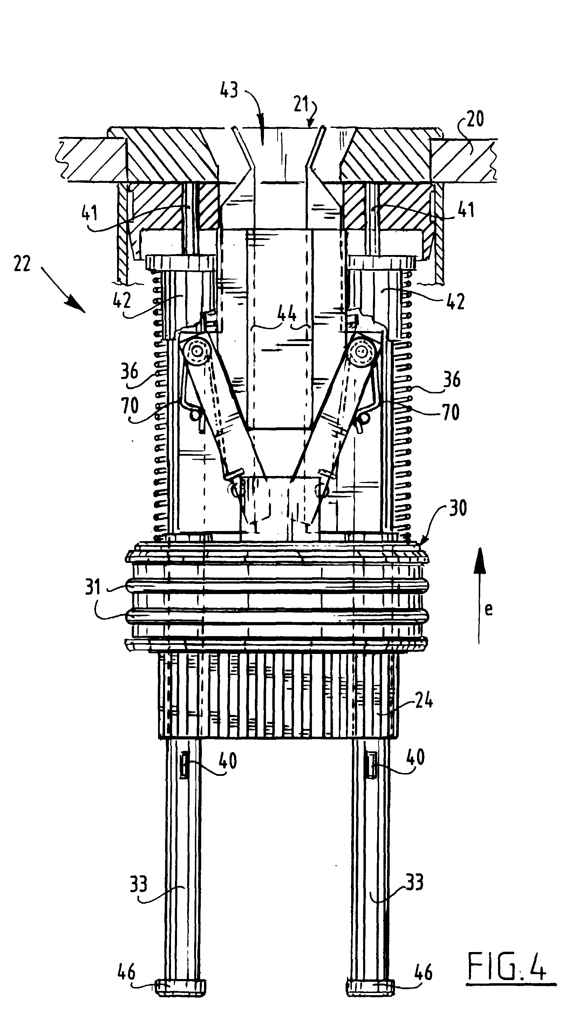

In figures 3 and 4 the shuttle 22 is shown in more detail. Shuttle 22 is constructed from a lower disc 30 and an upper disc 32 which are mutually connected via rod-like spacers 33. Ring 24 is arranged against the underside of lower disc 30. Arranged on the periphery of lower disc 30 are rubber sealing rings 31 which provide an airtight sealing between shuttle 22 on the one side and transport tube 23 on the other. Rod-like spacers 33 are freely guidable in openings arranged in lower disc 30. At the top the rod-like spacers 33 are mounted fixedly on upper disc 32. In the starting position springs 36 urge lower disc 30 and upper disc 32 apart and these discs are blocked in this position by blocking components 37 arranged in the hollow rod-like spacers 33, which blocking components 37 are provided on their outer end with hook-like components 39 which protrude through openings 40 arranged in spacers 33.

Banknotes for instance are clamped fixedly between a first clamping member 34a and a second clamping member 34b which pivot round first hinge parts 35a and second hinge parts 35b arranged on lower disc 30.

When shuttle 22 arrives at receiving station 13 it is brought in the manner described below from the starting position shown in figure 3 to the compressed position shown in figure 4. When shuttle 22 has reached the counter surface 20, pins 41 arranged on the top side of upper disc 32 are pushed in, which pins operate caps 42 guidable over spacers 33. These caps ensure that the upper hook-like components 39 of blocking components 37 are pressed into the hollow rod-like spacers 33. Since blocking components 37 are rotatable around blocking component shafts 38, the lower hook-like components of blocking component 37 are likewise pressed inward. Shuttle 22 is hereby released and can be brought into the compressed position. Due to the continuous pressure of endless belts 50 against lower disc 30 and because the blocking is now inactive, lower disc 30 moves upward in the direction of arrow e, while upper disc 32 remains in place. Shuttle 22 is here as it were compressed. Through this movement in the direction of arrow e the first clamping members 34a and second clamping members 34b are moved upward correspondingly to a position beyond opening 43 in upper disc 32. Strips 44 arranged fixedly on upper disc 32 have meanwhile urged a first releasing part 45a and a second releasing part 45b outward, so that first and second clamping members 34a and 34b arranged hingedly on respectively the first and second releasing parts 45a and 45b pivot outward. The money clamped between clamping members 34a and 34b is hereby released. The bank employee can then remove the money in simple manner from shuttle 22.

Conversely, when a bank employee wishes to transport money to automatic teller machine 1, the banknotes are placed between the first and second clamping members 34a and 34b. The bank employee subsequently enters a command into the control 11/9 of the system via input terminal 14 to take the money to automatic teller machine 1. The control switches on endless belts 50 which displace lower disc 30 downward until the underside of ring 24 contacts the flanges 46 arranged on the underside of spacers 33, which flanges 46 function as stop. With continued movement of endless belts 50 the upper disc 32 is then likewise pulled downward, whereby pins 41 are released. Springs 47 arranged in spacers 33 bring the blocking component 37 into its original position, i.e. with the hook-like components 39 through openings 40 in spacers 33. Shuttle 22 is then once again blocked in its starting position. After closure of cover plate 58 the shuttle 22 is subsequently dispatched at great speed in the direction of automatic teller machine 1 due to the underpressure occurring in transport tube 23.

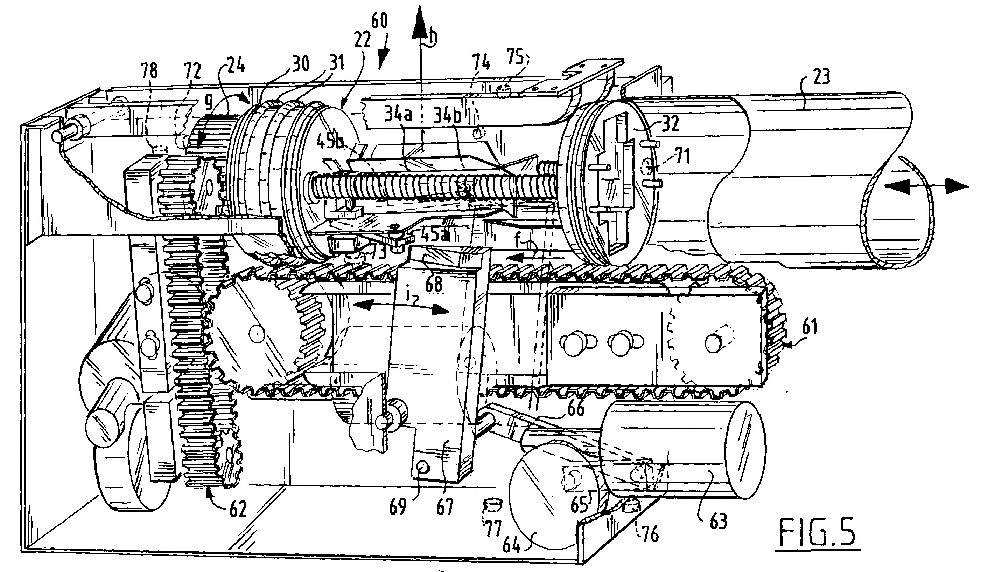

Having arrived at receiving station 60 at automatic teller machine 1, shuttle 22 is then positioned with an endless belt (see figure 5) in the direction of arrow f. Endless belt 62 is subsequently placed against a ring 24, whereafter shuttle 22 is positioned in the direction of rotation. Clamping members 34a and 34b are herein directed such that the money can be readily removed in the direction of arrow h by the pick and place unit. For this purpose however, the first and second clamping members 34a and 34b must first be moved apart by operating the releasing parts 45a and 45b. This takes place using an electric motor 63 which rotates a disc 64, which rotation is transmitted via arm 65 and 66 to opening arms 67 which are each provided on the top with a chamfered side 68. Opening arms 67 are rotatable around a shaft 69. Counter-clockwise rotation ensures that the chamfered side 68 of opening arms 67 urge the releasing parts 45a and 45b apart, which results in opening of clamping members 34a and 34b. The money can hereby be removed in simple manner. After removal of the money the opening arms 67 are rotated in opposing direction, whereby releasing parts 45a and 45b return to their original position due to the spring force of spring 70, whereby the first and second clamping members 34a and 34b are clamped against each other again.

Receiving station 60 is provided with eight sensors. Sensor 71 detects the arrival of a shuttle 22, sensor 72 detects whether shuttle 22 has fully entered, sensor 73 whether shuttle 22 is oriented correctly, sensor 74 detects whether money is present inside clamping members 34a and 34b, sensor 75 detects whether the money is situated in a correct position, sensor 76 detects whether clamping members 34a and 34b are opened, sensor 77 detects whether clamping members 34a and 34b are closed and sensor 78 detects whether endless belt 62 is pressed against ring 24. Information from these sensors is sent via a cable connection to control electronics 9 and optionally then processed in computer 11.

Counter station 13 is provided in the same manner with eight sensors 81-88, wherein sensor 81 detects the arrival of a shuttle 22, sensor 82 detects whether shuttle 22 has fully entered, sensor 83 whether shuttle 22 is situated in compressed position, sensor 84 detects whether the shuttle is oriented correctly, sensor 85 detects whether money is present, sensor 86 detects whether endless belt 62 is pressed against ring 24, sensor 87 detects whether cover plate 58 is open and sensor 88 detects whether cover plate 58 is closed. Sensor data is sent via a cable connection to control electronics 9 and optionally to computer 11, whereafter the data is processed.

Since automatic teller machine 1 is connected via a number of transmission lines to central computer 11, accounting data, such as information about the balance of a particular client, the number of each type of banknote available in automatic teller machine 1 and the like can be determined by the computer. Furthermore, by having the banknotes or optional other securities such as cheques and the like examined for authenticity by automatic teller machine 1, this operation does not have to be performed by the bank employee at the counter, which saves time.

Because banknotes can be removed from the top of shuttle 22 or can be inserted at the top, it is possible to provide a compact counter station 13 wherein banknotes can be processed in simple manner. By adapting shuttle 22 such that banknotes can also be removed or arranged from the side, as is the case with receiving station 60, a pick and place unit 5 can, in view of the commercially available automatic teller machines, be embodied in simple manner, wherein a movement of the gripper of pick and place unit 5 need only be provided in two directions. A pick and place unit 5 of simple construction will hereby suffice, wherein the chance of malfunctions, breakdown and the like is minimal.

## Claims

1. System for transporting valuable objects, in particular banknotes, to and from a storage device for valuable objects, comprising:
- a transport tube member between a first and second position;
- a carrier member movable in the transport tube member for carrying the valuable objects;
- drive means for driving the carrier member in the transport tube member;
- a pick and place member for picking up valuable objects from the carrier member and placing valuable objects into the storage device for valuable objects and for picking up valuable objects from the storage device for valuable objects and placing valuable objects in the carrier member.

2. System as claimed in claim 1, wherein the carrier member is adapted such that the valuable objects can be arranged and dispensed in the longitudinal direction of the carrier member and transversely of the longitudinal direction of the carrier member.

3. System as claimed in claim 1, wherein the carrier member is adapted such that the valuable objects can be arranged and dispensed in the longitudinal direction of the carrier member at the first position and transversely of the longitudinal direction of the carrier member at the second position.

4. System as claimed in claim 1, 2 or 3, wherein a first receiving station is arranged on the transport tube member at the first position and a second receiving station at the second position.

5. System as claimed in claim 4, wherein a receiving station comprises a housing in which is arranged inter alia:
- a transport tube opening for connecting the transport tube;
- at least one endless belt for positioning a carrier member in the longitudinal direction;
- rotating means for rotating the carrier member in order to position the carrier member in the rotation direction.

6. System as claimed in any of the foregoing claims, provided with control means for controlling the system.

7. System as claimed in claim 6, wherein sensors are provided which are connected to the control means in order to control the system.

8. System as claimed in claim 6, wherein the control means comprise a central control member.

9. System as claimed in any of the foregoing claims, provided with processing means for processing accounting data relating to the valuable objects transported by the system.

10. System as claimed in claim 8 or 9, wherein the central control member and/or the processing means are formed by a PC.

11. System as claimed in any of the foregoing claims, wherein the drive means comprise air pump means for creating overpressure or underpressure in the transport tube.

12. System as claimed in any of the claims 4-10, wherein the first receiving station is provided with a counter surface in which a counter surface opening is arranged.

13. System as claimed in claim 12, wherein the carrier member is provided with a passage opening and with means for aligning the passage opening relative to the counter surface opening in suitable manner.

14. Carrier member for transporting valuable objects, in particular banknotes, in a transport tube, comprising:
- a lower carrier element;
- an upper carrier element;
- at least one spacer arranged between the lower and upper carrier element and fixed thereto;
- a holder arranged on the lower carrier element for holding the valuable objects in a suitable orientation.

15. Carrier member as claimed in claim 14, wherein the carrier member is adapted such that valuable objects can be arranged in and removed from the holder both from the top and from the side.

16. Carrier member as claimed in claim 14 or 15, provided with means for varying the distance between the carrier elements, wherein in a first situation the distance is greater than in a second situation, wherein in the second situation at least a part of the holder extends through a passage opening in the upper carrier element.

17. Carrier member as claimed in any of the claims 14-16, wherein the holder is provided with clamping means which clamp the valuable objects in the suitable orientation in the first situation and release the valuable objects in the second situation.

18. Carrier member as claimed in any of the claims 14-17, wherein closing means are arranged on the lower carrier element for a substantially airtight sealing against the transport tube.

19. Carrier member as claimed in any of the claims 14-18, intended for use in the system as claimed in any of the claims 1-13.

20. Receiving station for use in the system as claimed in any of the claims 1-13.
